# EUROPEAN PATENT APPLICATION

(11) **EP 4 538 112 A1**
(43) Date of publication of application: **16.04.2025**
(21) Application number: 24205099.5
(22) Date of filing: 07.10.2024
(51) Int. Cl.: B60N 2/56

(54) **FOAM CUSHION WITH HEATER WIRE**

(30) Priority: 11.10.2023 US 202363543572 P; 17.07.2024 US 202418775246
(71) Applicant: Lear Corporation, Southfield, MI 48033 (US)
(72) Inventor: WASHINGTON, Tyler, Southfield, 48022 (US)
(74) Representative: Haseltine Lake Kempner LLP

(57) **Abstract**

An assembly and method includes sewing a heater wire directly to one side of a foam seat cushion.

## Description

### RELATED APPLICATIONS

This application claims the benefit of U.S. Provisional Application No. 63/543,572, filed October 11, 2023, the entirety of which is herein incorporated by reference.

### BACKGROUND

Some vehicles may include seats associated with a heating system that selectively generates heat for occupant comfort. A typical heating system comprises a source of electrical energy that is installed within a heating mat provided within the vehicle seat. Traditionally, the heating mat is generally flat and rectangular in shape and includes an electrically conductive wire that is integrated into the mat.

### BRIEF DESCRIPTION OF THE DRAWINGS

Figure 1 is a schematic side view of a vehicle seat cushion with a heater wire.
Figure 2 is a section view of a seat foam cushion with a heater wire.
Figure 3 is a bottom view of the seat foam cushion of Figure 2.
Figure 4 is a top view of the seat foam cushion of Figure 2.
Figure 5 is one example of blind stitching used to attach the heater wire to the seat foam cushion.
Figure 6 is another example of blind stitching used to attach the heater wire to the seat foam cushion.
Figure 7 is a schematic view of a tunnel formed using the blind stitching of Figure 6.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

It should be understood that terms such as "about," "substantially," and "generally" are not intended to be boundary less terms, and should be interpreted consistent with the way one skilled in the art would interpret those terms.

This disclosure relates to a trim cover module where a heater wire is directly sewn on top of a foam cushion as opposed to having the heater wire sewn into a mat and then being attached to the foam cushion.

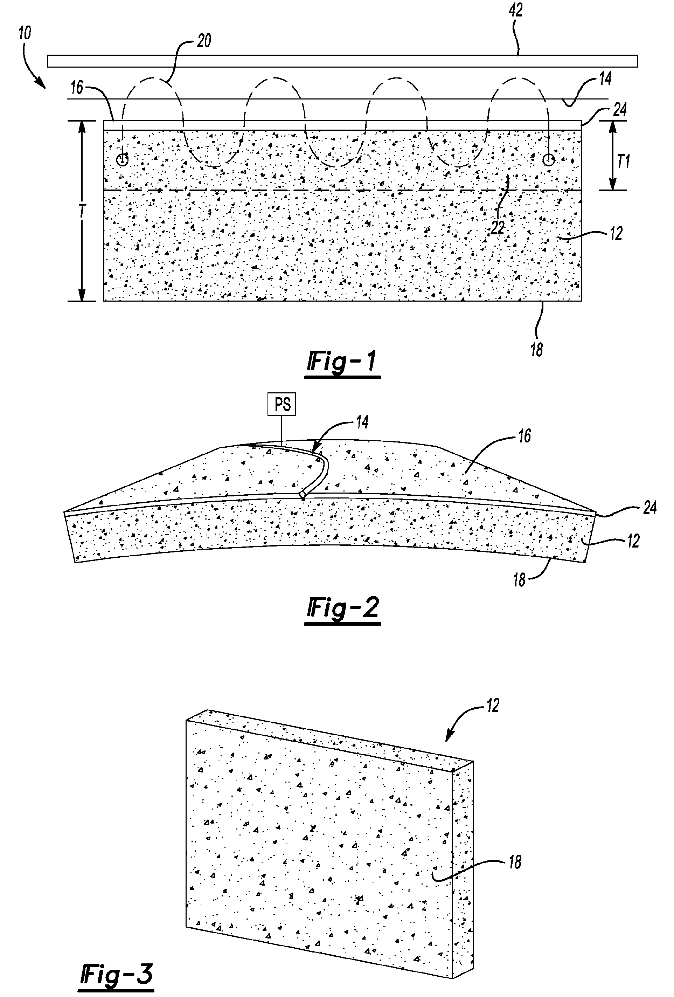

Figures 1-4 show a vehicle seat member 10 comprising a foam seat cushion 12 and a heater wire 14 that is sewn directly to the foam seat cushion 12. In one example, the seat member 10 comprises a seat bottom cushion however, the seat member could also comprise a seat back that is associated with a seat bottom. In one example, the foam seat cushion 12 is made from a PU foam, Hacoflex, reticulated foam, or other foam material. In one example, the heater wire 14 is an electrically conductive wire, such as a thin metallic heating element for example, which is sewn directly onto one side of the foam seat cushion 12. The heater wire 14 is connected to a power source PS in a known manner.

In implementations, the foam seat cushion 12 includes a layer of scrim material 24 with the heater wire 14 being directly attached to the foam seat cushion 12 through the scrim material. In one example, the scrim material comprises a lightweight, reinforcing fabric and is used to add strength, stability, and durability to the cushion 12. Further, the scrim material helps to maintain the shape of the cushion 12 over time and provides support to the foam or other padding materials inside the seat cushion.

In one example, the heater wire 14 and associated stitching are only located on one side of the cushion 12. The layer of scrim material 24 is on an upper surface 44 of the cushion 12. As shown in Figure 1, the foam seat cushion 12 and scrim layer 24 includes a first side 16 and a second side 18 that is opposite of the first side 16. The heater wire 14 and thread 20 for the stitching associated with the heater wire 14 are entirely located on the one side, e.g. the first side 16.

In other words, the stitching does not extend through an entire thickness of the foam seat cushion 12. This leaves the opposite side, e.g. the second side 18, free from stitching associated with the heater wire 14. As such, stitching thread does not appear on the opposite side from where the heater wire 14 is attached (Figure 3).

In implementations, the heater wire 14 can be utilized with a foam material of the cushion that can have any thickness. In one example, the heater wire 14 and associated stitching are located within a thickness range of the cushion 12 that is less than the entire thickness. As shown in Figure 1, the foam seat cushion 12 and scrim layer 24 has an overall thickness T (Figure 1) extending from the first side 16 to the second side 18. The foam seat cushion 12 and scrim layer 24 include a zone 22 or zone area that has a heater wire and stitching zone thickness T1. The zone 22 forms a designated area within the foam seat cushion 12, starting from the wire stitching surface at the first side 16 and extending into the cushion body. The zone 22 includes both the heater wire 14 and any thread 20 for the associated stitching. The heater wire and stitching zone thickness T1 is less than the overall thickness T such that the stitching does not extend through the entire thickness T and is instead only located on one side 16 of the cushion 12 (see Figure 2).

In one example, the stitching for the heater wire 14 is maintained within a limited depth from the stitching surface at the first side 16. In one example, the limited depth comprises the heater wire and stitching zone thickness T1. In one example, the stitching associated with the heater wire 14 is within a 10 mm depth from an outer surface of the first side 16 of the foam seat cushion 12. In another example, the heater wire 14 is within a 5 mm depth from an outer surface of the first side 16 of the foam seat cushion 12 and scrim layer 24.

In implementations, the foam cushion 12 includes an upper scrim material surface with the heater wire 14 being directly attached to the foam seat cushion 12 through the scrim material 24. In one example, the foam seat cushion 12 comprises a single-piece foam body having the scrim material 24 on the outer surface 44 of only one side, e.g. the first side 16. The heater wire 14 is directly sewn to the scrim material. In one example, the scrim material comprises a felt material; however, other types of material could also be used.

In one example, a specific stitching is used for wire attachment. In one example, the stitching associated with the heater wire 14 comprises blind stitching, which provides an invisible stitch or slip stitch made to be invisible on at least one side of the cushion 12.

In implementations, blind stitching is a sewing technique used to create a nearly invisible hem or seam on fabric. The stitches are designed to be hidden within an area of associated fabric or material, making the stitches barely noticeable from an external view.

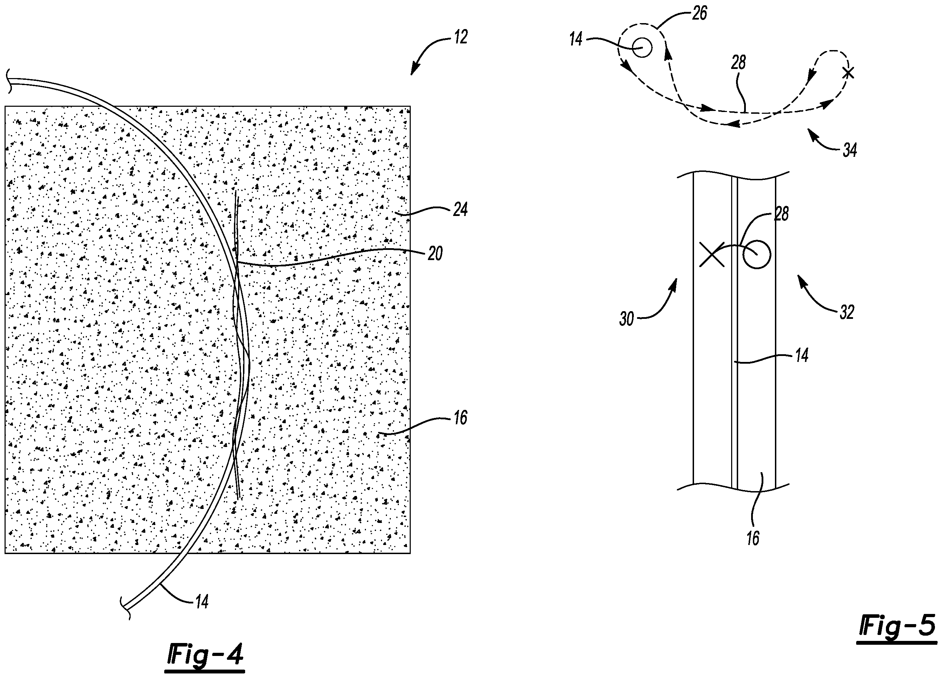

Figure 5 shows one example of blind stitching used for wire attachment. In this example, the blind stitching includes the heater wire 14, which is surrounded by stitching loops 26. This blind stitching method includes using the heater wire 14 in substitution of one blind stitching thread and stitching around the heater wire 14 with another blind stitching thread 28 (into the page as indicated at 30 and out of the page as indicated at 32) such that the heater wire 14 extends through stitching loops 26 of the remaining blind stitching thread 28. In this example, the stitching comprises a series of figure-eight loops with the heater wire extending through one of the loops as indicted at 34.

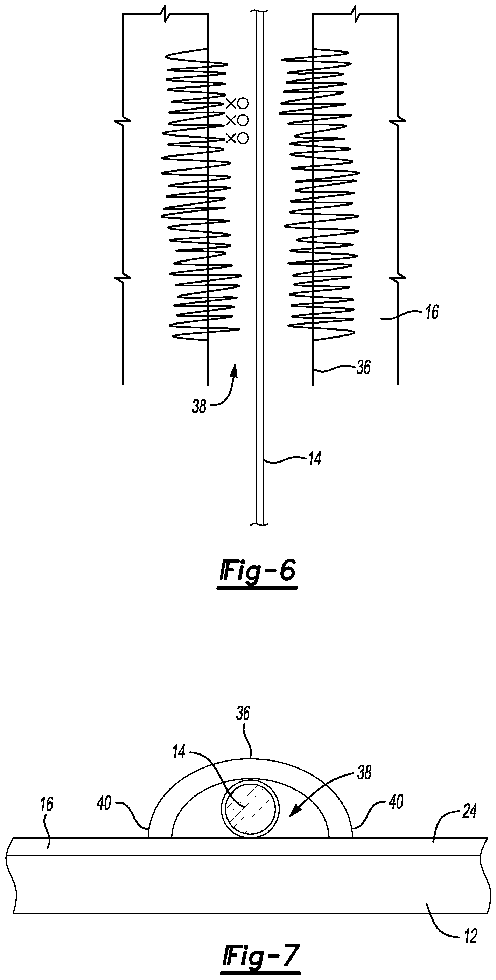

Figures 6-7 show another example of blind stitching used for wire attachment. In this example, the blind stitching is used to attach a small piece of material 36 to the cushion 12 that forms a tunnel 38. The heater wire 14 fed through tunnel 38 attached to cushion 12. In one example, the tunnel 38 comprises a U-shaped or C-shaped structure having opposing edges 40 attached to the cushion 12 to form an open center area. The material used to form the tunnel 38 is attached to the first side 16 of the foam seat cushion 12 along a designated wire path. The designated wire path is pattern specific for desired wire locations on the cushion 12.

In one example, the tunnel 38 formed from a material having heat conductive properties above a predetermined level such that heat can be easily conducted through the material. In one example, the material comprises woven material with heat conducting elements, Those skilled in the art who have the benefit of this description will be able to determine the appropriate material that would be utilized for these purposes. The heater wire 14 is then located within the tunnel 38. The stitching used to attach tunnel material to the cushion 12 provides a tunnel path within the tunnel 38 that is free from stitching such that the heater wire 14 can extend through the tunnel 38.

In one example, a trim cover 42 is included to form a trim cover module. In the example of Figure 1, the trim cover 42 is attached to the foam seat cushion 12 directly over the scrim material surface of the cushion 12 to form the trim cover module. In one example, the trim cover 42 comprises leather, PVC, PU, a textile material, or other suitable material used to provide a desired aesthetic appearance. The heater wire is then directly positioned between the cushion and the trim cover.

In implementations, an assembly includes a foam seat cushion, and a heater wire sewn directly onto one side of the foam seat cushion.

The assembly can include any of the following either alone or in combination.

The assembly may include the heater wire and stitching associated with the heater wire being entirely located on the one side of the foam seat cushion.

The assembly may include where the one side of the foam seat cushion comprises a first side and wherein the foam seat cushion includes a second side opposite from the first side, and wherein the second side is free from stitching associated with the heater wire.

The assembly may include, wherein: the one side of the foam seat cushion comprises a first side; the foam seat cushion includes a second side opposite from the first side; the foam seat cushion has an overall thickness extending from the first side to the second side; and the foam seat cushion includes a heater wire and stitching zone thickness starting from the first side, the heater wire and stitching zone thickness being less than the overall thickness.

The assembly may include where stitching associated with the heater wire is within a 10 mm depth from an outer surface of the one side of the foam seat cushion.

The assembly may include where stitching associated with the heater wire comprises blind stitching.

The assembly may include where the blind stitching comprises the heater wire extending through stitching loops.

The assembly may include a tunnel attached to the one side of the foam seat cushion along a designated wire path, the tunnel formed from a material having heat conductive properties above a predetermined level, and wherein the heater wire is located within the tunnel.

The assembly may include where the foam seat cushion comprises a single-piece foam body having scrim material on the one side, and wherein the heater wire is directly sewn to the scrim material.

The assembly may include a trim cover attached to the foam seat cushion over the scrim material and forming a trim cover module.

A method of attaching a heater wire directly to a foam cushion is also disclosed. The method includes directly sewing a heater wire to one side of a foam seat cushion.

The method may include any of the following method steps either alone or in combination.

The method may include locating an entirety of the heater wire and stitching associated with the heater wire on the one side of the foam seat cushion.

The method may include maintaining the second side free from stitching associated with the heater.

The method may include providing the foam seat cushion with an overall thickness extending from the first side to the second side, and forming a heater wire and stitching zone thickness starting from the first side and terminating before reaching the second side such that the heater wire and stitching zone thickness is less than the overall thickness.

The method may include stitching the heater wire within a 10 mm depth from an outer surface of the one side of the foam seat cushion.

The method may include blind stitching the heater wire to the one side of the foam seat cushion.

The method may include using the heater wire in substitution of one blind stitching thread and stitching around the heater wire such that the heater wire extends through stitching loops of the remaining blind stitching threads.

The method may include providing a tunnel material having heat conductive properties above a predetermined level, attaching a tunnel formed from the tunnel material to the one side of the foam seat cushion along a designated wire path, and subsequently feeding the heater wire through the tunnel along the designated wire path.

The method may include providing the foam seat cushion as a single-piece foam body having scrim material on one side, and including directly sewing the heater wire to the scrim material.

The method may include attaching a trim cover to the foam seat cushion over the scrim material and forming a trim cover module.

This subject disclosure provides a seat assembly where a heater wire is directly sewn on top of a foam cushion as opposed to having the heater wire sewn into another layer, a nonwoven mat for example, and then being attached to the foam cushion. This is advantageous as it decreases material use and cost within the seat assembly. Also, the number of layers of material is reduced and there is no read through.

Although the different examples have the specific components shown in the illustrations, embodiments of this disclosure are not limited to those particular combinations. It is possible to use some of the components or features from one of the examples in combination with features or components from another one of the examples. In addition, the various figures accompanying this disclosure are not necessarily to scale, and some features may be exaggerated or minimized to show certain details of a particular component or arrangement.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. An assembly comprising:
a foam seat cushion; and
a heater wire sewn directly onto one side of the foam seat cushion.

2. The assembly of claim 1, wherein the heater wire and stitching associated with the heater wire are entirely located on the one side of the foam seat cushion.

3. The assembly of claim 2, wherein the one side of the foam seat cushion comprises a first side and wherein the foam seat cushion includes a second side opposite from the first side, and wherein the second side is free from stitching associated with the heater wire.

4. The assembly of any of claims 1 to 3, wherein:
the one side of the foam seat cushion comprises a first side;
the foam seat cushion includes a second side opposite from the first side;
the foam seat cushion has an overall thickness extending from the first side to the second side; and
the foam seat cushion includes a heater wire and stitching zone thickness starting from the first side, the heater wire and stitching zone thickness being less than the overall thickness.

5. The assembly of any of claims 1 to 4, wherein stitching associated with the heater wire comprises blind stitching, e.g. wherein the blind stitching comprises the heater wire extending through stitching loops.

6. The assembly of claim 5, including a tunnel attached to the one side of the foam seat cushion along a designated wire path, the tunnel formed from a material having heat conductive properties above a predetermined level, and wherein the heater wire is located within the tunnel.

7. A method comprising:
sewing a heater wire directly to one side of a foam seat cushion.

8. The method of claim 7, including locating an entirety of the heater wire and stitching associated with the heater wire on the one side of the foam seat cushion.

9. The method of claim 7 or 8, wherein the one side of the foam seat cushion comprises a first side and wherein the foam seat cushion includes a second side opposite from the first side, and including maintaining the second side free from stitching associated with the heater wire.

10. The method of any of claims 7 to 9, wherein:
the one side of the foam seat cushion comprises a first side;
the foam seat cushion includes a second side opposite from the first side;
the foam seat cushion has an overall thickness extending from the first side to the second side; and
the method includes forming a heater wire and stitching zone thickness starting from the first side and terminating before reaching the second side such that the heater wire and stitching zone thickness is less than the overall thickness.

11. The method of any of claims 7 to 10, including blind stitching the heater wire to the one side of the foam seat cushion, e.g. including using the heater wire on the one side of the foam seat cushion in substitution of one blind stitching thread and stitching around the heater wire such that the heater wire extends through stitching loops of remaining blind stitching threads.

12. The method of claim 11, including:
providing a tunnel material having heat conductive properties above a predetermined level; attaching a tunnel formed from the tunnel material to the one side of the foam seat cushion along a designated wire path; and
subsequently feeding the heater wire through the tunnel along the designated wire path.

13. The assembly of any of claims 1 to 6 or method of any of claims 7 to 12, wherein the foam seat cushion comprises a single-piece foam body having scrim material on the one side, and wherein the heater wire is directly sewn to the scrim material.

14. The assembly or method of claim 13, including attaching a trim cover to the foam seat cushion over the scrim material and forming a trim cover module.

15. The assembly of any of claims 1 to 6 or 13 to 14 or method of any of claims 7 to 14, wherein stitching associated with the heater wire is within a 10 mm depth from an outer surface of the one side of the foam seat cushion.
